# EUROPEAN PATENT APPLICATION

(11) **EP 4 478 241 A1**
(43) Date of publication of application: **18.12.2024**
(21) Application number: 23878611.5
(22) Date of filing: 08.05.2023
(51) Int. Cl.: G06F 40/30, G06F 40/44, G06V 30/148, G06V 30/42, G06F 40/216, G06F 40/194

(54) **WORK ORDER ELEMENT EXTRACTION METHOD AND APPARATUS**

(30) Priority: 20.10.2022 CN 202211287455
(71) Applicant: Huawei Technologies Co., Ltd., Shenzhen, Guangdong 518129 (CN)
(72) Inventor: WANG, Xueming, Shenzhen, Guangdong 518129 (CN); MEI, Mingli, Shenzhen, Guangdong 518129 (CN); JIE, Yang, Shenzhen, Guangdong 518129 (CN)
(74) Representative: Maiwald GmbH
(86) International application number: PCT/CN2023/092725
(87) International publication number: WO 2024/082612

(57) **Abstract**

This application relates to a work order element extraction method and apparatus. The method includes: performing symbol removal processing on first work order text based on a preset symbol set to obtain second work order text; extracting a candidate name from the second work order text based on a preset statistics dictionary to obtain a candidate name set; selecting a target name from the candidate name set, where the target name is a candidate name that is in the candidate name set and that has a highest semantic similarity with a second standard name in the statistics dictionary; and determining a first standard name that is in the statistics dictionary and that corresponds to the target name as a work order element extracted from the first work order text. According to embodiments of this application, accuracy of extracting the work order element can be improved.

## Description

This application claims priority to Chinese Patent Application No. 202211287455.7, filed with the China National Intellectual Property Administration on October 20, 2022 and entitled "WORK ORDER ELEMENT EXTRACTION METHOD AND APPARATUS", which is incorporated herein by reference in its entirety.

### TECHNICAL FIELD

This application relates to the field of artificial intelligence, and in particular, to a work order element extraction method and apparatus.

### BACKGROUND

Agents in a customer service center answer a large quantity of user calls every day and handle the calls on agent workbenches. Generally, after a call between an agent and a user ends, the agent fills a work order element based on content of the call. This work is highly repetitive and has high labor intensity. Therefore, the work order element needs to be intelligently filled, to reduce duration for the agent to fill in a work order.

When the work order element is intelligently filled, the work order element needs to be extracted from the content of the call between the agent and the user. In a related technology, when the work order element is extracted, generally, the content of the call between the agent and the user is first converted into work order text by using a speech recognition (automatic speech recognition, ASR) technology, and then the work order element is extracted from the work order text based on an entity recognition model. However, because noise interference (for example, a typo or an incorrect punctuation mark location) generally exists in the work order text obtained by using the speech recognition ASR technology, accuracy of extracting the work order element from the work order text based on the entity recognition model is not high.

### SUMMARY

In view of this, a work order element extraction method and apparatus are proposed.

According to a first aspect, an embodiment of this application provides a work order element extraction method. The method includes: performing symbol removal processing on first work order text based on a preset symbol set to obtain second work order text; extracting a candidate name from the second work order text based on a preset statistics dictionary to obtain a candidate name set, where the statistics dictionary includes a plurality of first standard names and a second standard name corresponding to each first standard name, and the second standard name is a name obtained by performing symbol removal processing on the first standard name; selecting a target name from the candidate name set, where the target name is a candidate name that is in the candidate name set and that has a highest semantic similarity with the second standard name in the statistics dictionary; and determining a first standard name that is in the statistics dictionary and that corresponds to the target name as a work order element extracted from the first work order text.

In this embodiment of this application, symbol removal processing can be performed on the first work order text based on the preset symbol set to obtain the second work order text, and the candidate name is extracted from the second work order text based on the preset statistics dictionary to obtain the candidate name set. Then, the target name is selected from the candidate name set, where the target name is the candidate name that is in the candidate name set and that has the highest semantic similarity with the second standard name in the statistics dictionary. The first standard name that is in the statistics dictionary and that corresponds to the target name is determined as the work order element extracted from the first work order text. In this manner, the work order element can be extracted from the first work order text based on the statistics dictionary and the semantic similarity, so that impact of noise interference in the work order text on a work order element extraction process can be reduced, thereby improving accuracy of extracting the work order element.

According to the first aspect, in a first possible implementation of the work order element extraction method, the statistics dictionary further includes a plurality of first characters and a maximum length corresponding to each first character; and the extracting a candidate name from the second work order text based on a preset statistics dictionary to obtain a candidate name set includes: the statistics dictionary further includes a plurality of first characters and a maximum length corresponding to each first character; and the extracting a candidate name from the second work order text based on a preset statistics dictionary to obtain a candidate name set includes: using a 1^{st} character of the second work order text as a to-be-matched character; determining whether the to-be-matched character is the first character in the statistics dictionary; when the to-be-matched character is the first character in the statistics dictionary, truncating a first character string from the second work order text by using the to-be-matched character as a start point and using a maximum length corresponding to the to-be-matched character in the statistics dictionary plus 1 as a truncation length; determining whether the first character string meets a preset semantic similarity condition; when the first character string meets the semantic similarity condition, adding the first character string to the candidate name set by using the first character string as the candidate name; and using a 1^{st} character following the first character string in the second work order text as a new to-be-matched character, and starting to re-perform the following step: determining whether the to-be-matched character is the first character in the statistics dictionary.

In this embodiment, when the candidate name is extracted from the second work order text based on the preset statistics dictionary, the 1^{st} character of the second work order text can be first used as the to-be-matched character, and whether the to-be-matched character is the first character in the statistics dictionary is determined. When the to-be-matched character is the first character in the statistics dictionary, the first character string is truncated from the second work order text by using the to-be-matched character as the start point and using the maximum length corresponding to the to-be-matched character in the statistics dictionary plus 1 as the truncation length. Then, whether the first character string meets the semantic similarity condition is determined. When the first character string meets the semantic similarity condition, the first character string is added to the candidate name set as the candidate name. In addition, the 1^{st} character following the first character string in the second work order text is used as the new to-be-matched character, and the step "determining whether the to-be-matched character is the first character in the statistics dictionary" starts to be re-performed. In this manner, the candidate name can be extracted from the second work order text based on the preset semantic similarity condition and a dynamic step sliding window determined based on the to - be-matched character and the statistics dictionary, to obtain the candidate name set, so that impact of noise interference in the work order text on candidate name extraction can be reduced, thereby improving accuracy of extracting the work order element.

According to the first possible implementation of the first aspect, in a second possible implementation of the work order element extraction method, the determining whether the first character string meets a preset semantic similarity condition includes: determining a first semantic similarity between the first character string and each second standard name; determining a second standard name corresponding to a maximum value of the first semantic similarity as a third standard name; and when a difference between the maximum value of the first semantic similarity and a second semantic similarity is less than or equal to a preset similarity threshold, determining that the first character string meets the preset semantic similarity condition, where the second semantic similarity is a semantic similarity between the third standard name and a corresponding first standard name.

In this embodiment, during determining of whether the first character string meets the preset semantic similarity condition, the first semantic similarity between the first character string and each second standard name can be determined, and the second standard name corresponding to the maximum value of the first semantic similarity is determined as the third standard name. In addition, when the difference between the maximum value of the first semantic similarity and the second semantic similarity (the semantic similarity between the third standard name and the corresponding first standard name) is less than or equal to the preset similarity threshold, it is determined that the first character string meets the preset semantic similarity condition, so that the first character string that meets the semantic similarity condition can be determined, thereby improving accuracy of extracting the candidate name.

According to the first possible implementation of the first aspect, in a third possible implementation of the work order element extraction method, the statistics dictionary further includes a minimum length corresponding to each first character; and the extracting a candidate name from the second work order text based on a preset statistics dictionary to obtain a candidate name set further includes: when the to-be-matched character is not the first character in the statistics dictionary, or when the first character string does not meet the semantic similarity condition, determining a first location in the second work order text, where the first location is a location that is after the to-be-matched character and that is a first length away from the to-be-matched character, and the first length is a smallest value in minimum lengths corresponding to the first characters in the statistics dictionary; and using a character at the first location as a new to-be-matched character, and starting to re-perform the following step: determining whether the to-be-matched character is the first character in the statistics dictionary.

In this embodiment, when the candidate name is extracted from the second work order text, and when the to-be-matched character is not the first character in the statistics dictionary or the first character string does not meet the semantic similarity condition, the first location can be determined in the second work order text, the character at the first location is used as the new to-be-matched character, and the step "determining whether the to-be-matched character is the first character in the statistics dictionary" starts to be re-performed. In this manner, the candidate name can be extracted from the second work order text based on the preset semantic similarity condition and a dynamic step sliding window determined based on the to-be-matched character and the statistics dictionary, to obtain the candidate name set, so that impact of noise interference in the work order text on candidate name extraction can be reduced, thereby improving accuracy of extracting the work order element.

According to the first possible implementation of the first aspect, in a fourth possible implementation of the work order element extraction method, the statistics dictionary further includes a plurality of second characters and a maximum length corresponding to each second character; and the extracting a candidate name from the second work order text based on a preset statistics dictionary to obtain a candidate name set further includes: when the to-be-matched character is not the first character in the statistics dictionary, or when the first character string does not meet the semantic similarity condition, determining whether the to-be-matched character is the second character in the statistics dictionary; when the to-be-matched character is the second character in the statistics dictionary, truncating a second character string from the second work order text by using the to-be-matched character as a start point and using a maximum length corresponding to the to-be-matched character in the statistics dictionary plus 1 as a truncation length; determining whether the second character string meets the semantic similarity condition; when the second character string meets the semantic similarity condition, adding the second character string to the candidate name set by using the second character string as the candidate name; and using a 1^{st} character following the second character string in the second work order text as a new to-be-matched character, and starting to re-perform the following step: determining whether the to-be-matched character is the first character in the statistics dictionary.

In this embodiment, when the candidate name is extracted from the second work order text, and when the to-be-matched character is not the first character in the statistics dictionary, it can be determined whether the to-be-matched character is the second character in the statistics dictionary. When the to-be-matched character is the second character in the statistics dictionary, the second character string is truncated from the second work order text by using the to-be-matched character as the start point and using the maximum length corresponding to the to-be-matched character (used as the second character) in the statistics dictionary plus 1 as the truncation length, and whether the second character string meets the semantic similarity condition is determined. When the second character string meets the semantic similarity condition, the second character string is added to the candidate name set as the candidate name. In addition, the 1^{st} character following the second character string in the second work order text is used as the new to-be-matched character, and the step "determining whether the to-be-matched character is the first character in the statistics dictionary" starts to be re-performed. In this manner, impact of noise interference in the work order text (especially a conversion typo, a redundant word, or a missing word in the work order text) on candidate name extraction can be further reduced, thereby improving accuracy of extracting the work order element.

According to the first aspect or any one of the first possible implementation of the first aspect to the fourth possible implementation of the first aspect, in a fifth possible implementation of the work order element extraction method, the method further includes: establishing the statistics dictionary based on the plurality of first standard names.

In this embodiment, the statistics dictionary can be established based on the plurality of first standard names, so that the work order element is extracted based on the statistics dictionary, thereby improving accuracy of extracting the work order element.

According to the fifth possible implementation of the first aspect, in a sixth possible implementation of the work order element extraction method, the establishing the statistics dictionary based on the plurality of first standard names includes: performing symbol removal processing on each first standard name based on the preset symbol set to obtain the corresponding second standard name; classifying second standard names based on first characters of the second standard names to obtain a second standard name corresponding to each first character; determining a maximum length and a minimum length that correspond to each first character; and establishing the statistics dictionary based on each first standard name, each first character, the second standard name corresponding to each first character, and the maximum length and the minimum length that correspond to each first character.

In this embodiment, the statistics dictionary including each first standard name, each first character, the second standard name corresponding to each first character, and the maximum length and the minimum length that correspond to each first character can be established, and the work order element is extracted based on the statistics dictionary, so that accuracy of extracting the work order element can be improved.

According to the fifth possible implementation of the first aspect or the sixth possible implementation of the first aspect, in a seventh possible implementation of the work order element extraction method, the establishing the statistics dictionary based on the plurality of first standard names further includes: classifying the second standard names based on second characters of the second standard names to obtain a second standard name corresponding to each second character; determining a maximum length and a minimum length that correspond to each second character; and adding each second character, the second standard name corresponding to each second character, and the maximum length and the minimum length that correspond to each second character to the statistics dictionary.

In this embodiment, the second standard names can be classified based on the second characters of the second standard names to obtain the second standard name corresponding to each second character, and the maximum length and the minimum length that correspond to each second character are determined. Then, each second character, the second standard name corresponding to each second character, and the maximum length and the minimum length that correspond to each second character are added to the statistics dictionary, so that information related to the second character can be added to the statistics dictionary. In this way, the statistics dictionary includes more information, to improve accuracy of extracting the work order element based on the statistics dictionary.

According to a second aspect, an embodiment of this application provides a work order element extraction apparatus. The apparatus includes: a symbol removal module, configured to perform symbol removal processing on first work order text based on a preset symbol set to obtain second work order text; a candidate name extraction module, configured to extract a candidate name from the second work order text based on a preset statistics dictionary to obtain a candidate name set, where the statistics dictionary includes a plurality of first standard names and a second standard name corresponding to each first standard name, and the second standard name is a name obtained by performing symbol removal processing on the first standard name; a target name selection module, configured to select a target name from the candidate name set, where the target name is a candidate name that is in the candidate name set and that has a highest semantic similarity with the second standard name in the statistics dictionary; and a work order element determining module, configured to determine a first standard name that is in the statistics dictionary and that corresponds to the target name as a work order element extracted from the first work order text.

In this embodiment of this application, symbol removal processing can be performed on the first work order text based on the preset symbol set to obtain the second work order text, and the candidate name is extracted from the second work order text based on the preset statistics dictionary to obtain the candidate name set. Then, the target name is selected from the candidate name set, where the target name is the candidate name that is in the candidate name set and that has the highest semantic similarity with the second standard name in the statistics dictionary. The first standard name that is in the statistics dictionary and that corresponds to the target name is determined as the work order element extracted from the first work order text. In this manner, the work order element can be extracted from the first work order text based on the statistics dictionary and the semantic similarity, so that impact of noise interference in the work order text on a work order element extraction process can be reduced, thereby improving accuracy of extracting the work order element.

According to the second aspect, in a first possible implementation of the work order element extraction apparatus, the statistics dictionary further includes a plurality of first characters and a maximum length corresponding to each first character; and the candidate name extraction module includes: a first to-be-matched character determining submodule, configured to use a 1^{st} character of the second work order text as a to-be-matched character; a first judging submodule, configured to determine whether the to-be-matched character is the first character in the statistics dictionary; a first character string truncating submodule, configured to: when the to-be-matched character is the first character in the statistics dictionary, truncate a first character string from the second work order text by using the to-be-matched character as a start point and using a maximum length corresponding to the to-be-matched character in the statistics dictionary plus 1 as a truncation length; a second judging submodule, configured to determine whether the first character string meets a preset semantic similarity condition; a first set adding submodule, configured to: when the first character string meets the semantic similarity condition, add the first character string to the candidate name set by using the first character string as the candidate name; and a second to-be-matched character determining submodule, configured to: use a 1^{st} character following the first character string in the second work order text as a new to-be-matched character, and start to re-perform the following step: determining whether the to-be-matched character is the first character in the statistics dictionary.

In this embodiment, when the candidate name is extracted from the second work order text based on the preset statistics dictionary, the 1^{st} character of the second work order text can be first used as the to-be-matched character, and whether the to-be-matched character is the first character in the statistics dictionary is determined. When the to-be-matched character is the first character in the statistics dictionary, the first character string is truncated from the second work order text by using the to-be-matched character as the start point and using the maximum length corresponding to the to-be-matched character in the statistics dictionary plus 1 as the truncation length. Then, whether the first character string meets the semantic similarity condition is determined. When the first character string meets the semantic similarity condition, the first character string is added to the candidate name set as the candidate name. In addition, the 1^{st} character following the first character string in the second work order text is used as the new to-be-matched character, and the step "determining whether the to-be-matched character is the first character in the statistics dictionary" starts to be re-performed. In this manner, the candidate name can be extracted from the second work order text based on the preset semantic similarity condition and a dynamic step sliding window determined based on the to - be-matched character and the statistics dictionary, to obtain the candidate name set, so that impact of noise interference in the work order text on candidate name extraction can be reduced, thereby improving accuracy of extracting the work order element.

According to the first possible implementation of the second aspect, in a second possible implementation of the work order element extraction apparatus, the second judging submodule is configured to: determine a first semantic similarity between the first character string and each second standard name; determine a second standard name corresponding to a maximum value of the first semantic similarity as a third standard name; and when a difference between the maximum value of the first semantic similarity and a second semantic similarity is less than or equal to a preset similarity threshold, determine that the first character string meets the preset semantic similarity condition, where the second semantic similarity is a semantic similarity between the third standard name and a corresponding first standard name.

In this embodiment, during determining of whether the first character string meets the preset semantic similarity condition, the first semantic similarity between the first character string and each second standard name can be determined, and the second standard name corresponding to the maximum value of the first semantic similarity is determined as the third standard name. In addition, when the difference between the maximum value of the first semantic similarity and the second semantic similarity (the semantic similarity between the third standard name and the corresponding first standard name) is less than or equal to the preset similarity threshold, it is determined that the first character string meets the preset semantic similarity condition, so that the first character string that meets the semantic similarity condition can be determined, thereby improving accuracy of extracting the candidate name.

According to the first possible implementation of the second aspect, in a third possible implementation of the work order element extraction apparatus, the statistics dictionary further includes a minimum length corresponding to each first character, and the candidate name extraction module further includes: a location determining submodule, configured to: when the to-be-matched character is not the first character in the statistics dictionary, or when the first character string does not meet the semantic similarity condition, determine a first location in the second work order text, where the first location is a location that is after the to-be-matched character and that is a first length away from the to-be-matched character, and the first length is a smallest value in minimum lengths corresponding to the first characters in the statistics dictionary; and a third to-be-matched character determining submodule, configured to: use a character at the first location as a new to-be-matched character, and start to re-perform the following step: determining whether the to-be-matched character is the first character in the statistics dictionary.

In this embodiment, when the candidate name is extracted from the second work order text, and when the to-be-matched character is not the first character in the statistics dictionary or the first character string does not meet the semantic similarity condition, the first location can be determined in the second work order text, the character at the first location is used as the new to-be-matched character, and the step "determining whether the to-be-matched character is the first character in the statistics dictionary" starts to be re-performed. In this manner, the candidate name can be extracted from the second work order text based on the preset semantic similarity condition and a dynamic step sliding window determined based on the to-be-matched character and the statistics dictionary, to obtain the candidate name set, so that impact of noise interference in the work order text on candidate name extraction can be reduced, thereby improving accuracy of extracting the work order element.

According to the first possible implementation of the second aspect, in a fourth possible implementation of the work order element extraction apparatus, the statistics dictionary further includes a plurality of second characters and a maximum length corresponding to each second character; and the candidate name extraction module further includes: a third judging submodule, configured to: when the to-be-matched character is not the first character in the statistics dictionary, or when the first character string does not meet the semantic similarity condition, determine whether the to-be-matched character is the second character in the statistics dictionary; a second character string truncating submodule, configured to: when the to-be-matched character is the second character in the statistics dictionary, truncate a second character string from the second work order text by using the to-be-matched character as a start point and using a maximum length corresponding to the to-be-matched character in the statistics dictionary plus 1 as a truncation length; a fourth judging submodule, configured to determine whether the second character string meets the semantic similarity condition; a second set adding submodule, configured to: when the second character string meets the semantic similarity condition, add the second character string to the candidate name set by using the second character string as the candidate name; and a fourth to-be-matched character determining submodule, configured to: use a 1^{st} character following the second character string in the second work order text as a new to-be-matched character, and start to re-perform the following step: determining whether the to-be-matched character is the first character in the statistics dictionary.

In this embodiment, when the candidate name is extracted from the second work order text, and when the to-be-matched character is not the first character in the statistics dictionary, it can be determined whether the to-be-matched character is the second character in the statistics dictionary. When the to-be-matched character is the second character in the statistics dictionary, the second character string is truncated from the second work order text by using the to-be-matched character as the start point and using the maximum length corresponding to the to-be-matched character (used as the second character) in the statistics dictionary plus 1 as the truncation length, and whether the second character string meets the semantic similarity condition is determined. When the second character string meets the semantic similarity condition, the second character string is added to the candidate name set as the candidate name. In addition, the 1^{st} character following the second character string in the second work order text is used as the new to-be-matched character, and the step "determining whether the to-be-matched character is the first character in the statistics dictionary" starts to be re-performed. In this manner, impact of noise interference in the work order text (especially a conversion typo, a redundant word, or a missing word in the work order text) on candidate name extraction can be further reduced, thereby improving accuracy of extracting the work order element.

According to the second aspect or any one of the first possible implementation of the second aspect to the fourth possible implementation of the first aspect, in a fifth possible implementation of the work order element extraction apparatus, the apparatus further includes: a statistics dictionary establishment module, configured to establish the statistics dictionary based on the plurality of first standard names.

In this embodiment, the statistics dictionary can be established based on the plurality of first standard names, so that the work order element is extracted based on the statistics dictionary, thereby improving accuracy of extracting the work order element.

According to the fifth possible implementation of the second aspect, in a sixth possible implementation of the work order element extraction apparatus, the statistics dictionary establishment module includes: a symbol removal submodule, configured to perform symbol removal processing on each first standard name based on the preset symbol set to obtain the corresponding second standard name; a first classification submodule, configured to classify second standard names based on first characters of the second standard names to obtain a second standard name corresponding to each first character; a first corresponding length determining submodule, configured to determine a maximum length and a minimum length that correspond to each first character; and an establishment submodule, configured to establish the statistics dictionary based on each first standard name, each first character, the second standard name corresponding to each first character, and the maximum length and the minimum length that correspond to each first character.

In this embodiment, the statistics dictionary including each first standard name, each first character, the second standard name corresponding to each first character, and the maximum length and the minimum length that correspond to each first character can be established, and the work order element is extracted based on the statistics dictionary, so that accuracy of extracting the work order element can be improved.

According to the fifth possible implementation of the second aspect or the sixth possible implementation of the second aspect, in a seventh possible implementation of the work order element extraction apparatus, the statistics dictionary establishment module further includes: a second classification submodule, configured to classify the second standard names based on second characters of the second standard names to obtain a second standard name corresponding to each second character; a second corresponding length determining submodule, configured to determine a maximum length and a minimum length that correspond to each second character; and an adding submodule, configured to add each second character, the second standard name corresponding to each second character, and the maximum length and the minimum length that correspond to each second character to the statistics dictionary.

In this embodiment, the second standard names can be classified based on the second characters of the second standard names to obtain the second standard name corresponding to each second character, and the maximum length and the minimum length that correspond to each second character are determined. Then, each second character, the second standard name corresponding to each second character, and the maximum length and the minimum length that correspond to each second character are added to the statistics dictionary, so that information related to the second character can be added to the statistics dictionary. In this way, the statistics dictionary includes more information, to improve accuracy of extracting the work order element based on the statistics dictionary.

According to a third aspect, an embodiment of this application provides a work order element extraction apparatus, including a processor and a memory configured to store instructions that can be executed by the processor, where the processor is configured to implement the work order element extraction method according to the first aspect or one or more of the plurality of possible implementations of the first aspect when executing the instructions.

According to a fourth aspect, an embodiment of this application provides a non-volatile computer-readable storage medium. The non-volatile computer-readable storage medium stores computer program instructions, and when the computer program instructions are executed by a processor, the work order element extraction method according to the first aspect or one or more of the plurality of possible implementations of the first aspect is implemented.

According to a fifth aspect, an embodiment of this application provides a computer program product, including computer-readable code or a non-volatile computer-readable storage medium carrying the computer-readable code, where when the computer-readable code is run in an electronic device, a processor in the electronic device performs the work order element extraction method according to the first aspect or one or more of the plurality of possible implementations of the first aspect.

These aspects and other aspects of this application are more concise and more comprehensive in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1 is a diagram of an application scenario of a work order element extraction method according to an embodiment of this application;
FIG. 2 is a diagram of an agent workbench according to an embodiment of this application;
FIG. 3 is a flowchart of a work order element extraction method according to an embodiment of this application;
FIG. 4 is a diagram of a processing process of a work order element extraction method according to an embodiment of this application;
FIG. 5 is a diagram of a processing process of a work order element extraction method according to an embodiment of this application; and
FIG. 6 is a block diagram of a work order element extraction apparatus according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawings, the accompanying drawings are not necessarily drawn in proportion unless otherwise specified.

The specific term "example" herein means "used as an example, embodiment, or illustration". Any embodiment described as "example" herein is not necessarily explained as being superior or better than other embodiments.

In addition, to better describe this application, numerous specific details are provided in the following specific implementations. A person skilled in the art should understand that, this application can also be implemented without some specific details. In some instances, methods, means, elements, and circuits that are well-known to a person skilled in the art are not described in detail, so that a subject matter of this application is highlighted.

Generally, a work order element is extracted based on an entity recognition model. Before the entity recognition model is used, the entity recognition model needs to be trained based on work order text that includes labeling data in a specific scenario, to obtain a trained entity recognition model. When the work order element is extracted, content of a call between an agent and a user may be first converted into work order text by using a speech recognition ASR technology. Then, the work order text is input into the trained entity recognition model, entity recognition is performed on the work order text by using the trained entity recognition model to obtain an entity prediction result, and then the work order element is determined based on a probability value of the entity prediction result.

However, in this manner, training of the entity recognition model depends on the labeling data. Currently, no open-source dataset including the labeling data is available, existing historical work order text also lacks the labeling data, and manual labeling is required, resulting in a heavy workload. In addition, noise interference, for example, noise such as a typo or an incorrect punctuation mark, generally exists in the work order text obtained by using the speech recognition ASR technology. This affects accuracy of entity recognition of the entity recognition model, and further causes low accuracy of extracting the work order element.

To resolve the foregoing technical problem, this application provides a work order element extraction method. The method includes: performing symbol removal processing on first work order text based on a preset symbol set to obtain second work order text; extracting a candidate name from the second work order text based on a preset statistics dictionary to obtain a candidate name set, where the statistics dictionary includes a plurality of first standard names and a second standard name corresponding to each first standard name, and the second standard name is a name obtained by performing symbol removal processing on the first standard name; selecting a target name from the candidate name set, where the target name is a candidate name that is in the candidate name set and that has a highest semantic similarity with the second standard name in the statistics dictionary; and determining a first standard name that is in the statistics dictionary and that corresponds to the target name as a work order element extracted from the first work order text.

According to the work order element extraction method in embodiments of this application, symbol removal processing can be performed on the first work order text based on the preset symbol set to obtain the second work order text, and the candidate name is extracted from the second work order text based on the preset statistics dictionary to obtain the candidate name set. Then, the target name is selected from the candidate name set, where the target name is the candidate name that is in the candidate name set and that has the highest semantic similarity with the second standard name in the statistics dictionary. The first standard name that is in the statistics dictionary and that corresponds to the target name is determined as the work order element extracted from the first work order text. In this manner, the work order element can be extracted from the first work order text based on the statistics dictionary and the semantic similarity, so that impact of noise interference in the work order text on a work order element extraction process can be reduced, thereby improving accuracy of extracting the work order element.

In addition, according to the work order element extraction method in embodiments of this application, an entity recognition model is not required, and a historical work order text does not need to be manually labeled for training of the entity recognition model, so that a heavy workload caused by manual labeling can be avoided.

The work order element extraction method in embodiments of this application may be applied to an electronic device. The electronic device may be a server, a terminal device, or the like. The terminal device may be a personal computer, a netbook, a tablet computer, a notebook computer, or the like. A specific type of the electronic device is not limited in this application.

The work order element extraction method in embodiments of this application may be applied to a work order element pre-filling scenario of an intelligent customer service. In the work order element pre-filling scenario of the intelligent customer service, during a call between an agent and a user or after the call between the agent and the user ends, content of the call between the agent and the user may be converted into work order text by using a speech recognition ASR technology. Then, a work order element is extracted from the work order text by using the work order element extraction method in embodiments of this application, and is pre-filled in a preset location of a work order.

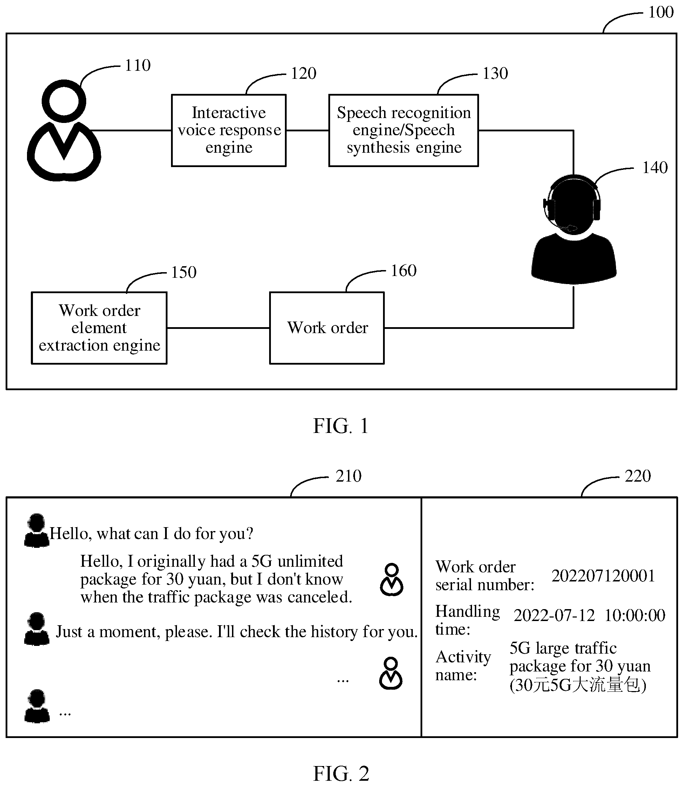

FIG. 1 is a diagram of an application scenario of a work order element extraction method according to an embodiment of this application. As shown in FIG. 1, the work order element extraction method in this embodiment of this application is applied to a work order element pre-filling scenario 100 of an intelligent customer service. In the work order element pre-filling scenario 100 of the intelligent customer service, a user 110 establishes a call connection to an agent 140 by using an interactive voice response (interactive voice response, IVR) engine 120, where the interactive voice response engine 120 is configured to make a voice call based on a predefined procedure. After the call connection is established, the user 110 may talk with the agent 140. During the call, related processing may be performed by using a speech recognition engine/speech synthesis engine 130, where the speech recognition ASR engine is configured to: convert speech of the user 110 into text and display the text on an agent workbench, and the speech synthesis (text to speech, TTS) engine is configured to: synthesize call scripts of the agent 140 into speech and play the speech to the user 110.

After the call between the user 110 and the agent 140 ends, a work order element extraction engine 150 extracts a work order element from work order text corresponding to content of the call by using the work order element extraction method in this embodiment of this application, and pre-fills the work order element in a preset location of a work order 160.

FIG. 2 is a diagram of an agent workbench according to an embodiment of this application. As shown in FIG. 2, the agent workbench includes two windows: a left window 210 and a right window 220.

The left window 210 is configured to display, in real time, text, namely, work order text, converted from content of a call between an agent and a user. This may be implemented based on the speech recognition engine/speech synthesis engine 130 in FIG. 1. The right window 220 is configured to display a work order. After the call ends, an activity name may be extracted from the work order text in the left window 210, and pre-filled in a location of "activity name" in the work order. This may be implemented based on the work order element extraction engine 150 in FIG. 1.

In addition to a work order element (namely, the activity name) extracted from the work order text, the work order in FIG. 2 may further include other information such as a work order serial number and handling time. Specific content included in the work order is not limited in this application.

The foregoing provides example descriptions of the application scenario of the work order element extraction method in this embodiment of this application only by using the activity name in FIG. 2 as the work order element. A scenario of extracting another work order element is similar to this scenario, and details are not described herein again. Specific content of the work order element is not limited in this application.

In addition to the foregoing application scenario, the work order element extraction method in this embodiment of this application may be further applied to another similar scenario. For example, the work order element extraction method in this embodiment of this application may be further applied to a scenario of extracting, from long text, a text character string (for example, a clause or a character string) most related to a standard name set. A specific application scenario of the work order element extraction method is not limited in this application.

In a possible implementation, before the work order element extraction method in this embodiment of this application is used to extract the work order element, a statistics dictionary needs to be established based on a plurality of first standard names. The first standard name may be an original standard name of a service provided by a service provider. The first standard name is related to the application scenario. For example, it is assumed that the application scenario is a work order element pre-filling scenario of an intelligent customer service of a communication operator. In the application scenario, the first standard name may be an original standard name of a service activity provided by the communication operator, and the first standard name may be, for example, as follows: 5G large traffic package for 30 yuan (30 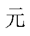 5G 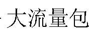 ), Migu Video SVIP package (one yuan in the first two months) ( 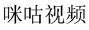 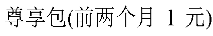 ), recharge 50 yuan to enjoy a 50-yuan consumption voucher (with a six-month contract commitment) ( 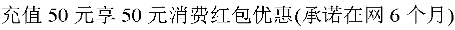 ), M-zone 5G Pass-30 yuan ( 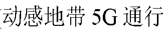 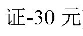 ), flower card-dedicated sponsored traffic package for NetEase Cloud Music ( 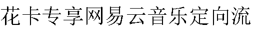 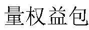 ), and flower card-dedicated sponsored traffic package for Sina Weibo ( 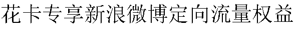 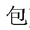 ). A person skilled in the art may determine specific content of the first standard name based on a specific application scenario. This is not limited in this application.

In a possible implementation, when the statistics dictionary is established based on the plurality of first standard names, symbol removal processing may be first performed on each first standard name based on a preset symbol set to obtain a corresponding second standard name. In other words, the second standard name is a name obtained by performing symbol removal processing on the first standard name, and the second standard name is in one-to-one correspondence with the first standard name.

The preset symbol set may include a plurality of punctuation marks that need to be removed. For example, the preset symbol set may include punctuation marks such as a bracket, a double quotation mark, a single quotation mark, a question mark, a comma, a hyphen, a comma, and a period. During actual application, a person skilled in the art may set, based on an actual situation, a specific punctuation mark included in the symbol set. For example, all punctuation marks that are meaningless to work order element extraction may be added to the symbol set. A specific symbol included in the symbol set is not limited in this application.

For example, it is assumed that the symbol set includes the bracket, the double quotation mark, the single quotation mark, the hyphen, the comma, and the period, and the first standard name is: Migu Video SVIP package (one yuan in the first two months) ( 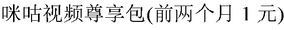 ). In this case, after symbol removal processing is performed on the first standard name based on the symbol set, the obtained second standard name is: Migu Video SVIP package one yuan in the first two months ( 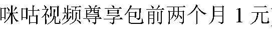 ).

After second standard names corresponding to the first standard names are obtained, the second standard names may be classified based on first characters of the second standard names to obtain a second standard name corresponding to each first character. The first character herein is a 1^{st} character in the second standard name. For example, if the second standard name is: Migu Video SVIP package one yuan in the first two months ( 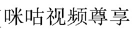 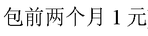 ), the first character of the second standard name is " 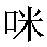 ". For another example, if the second standard name is: M-zone 5G Pass for 30 yuan ( 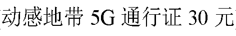 ), the first character of the second standard name is " 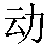 ".

For example, it is assumed that the second standard names are respectively: Migu Video SVIP package one yuan in the first two months ( 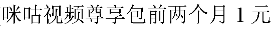 ), Migu Video SVIP package ( 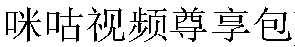 ), recharge 50 yuan to enjoy a 50-yuan consumption voucher with a six-month contract commitment ( 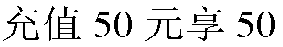 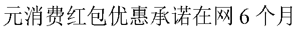 ), M-zone 5G Pass 2020 for 30 yuan: one yuan in the first month ( 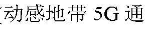 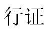 2020 30 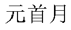 1 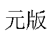 ), M-zone Pass for 30 yuan ( 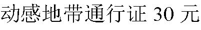 ), recharge 100 yuan to enjoy a 100-yuan consumption voucher with a six-month contract commitment ( 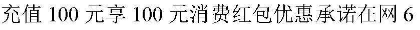 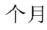 ), flower card-dedicated sponsored traffic package for NetEase Cloud Music ( 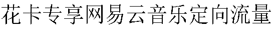 ), 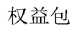 ), flower card-dedicated sponsored traffic package for Sina Weibo ( 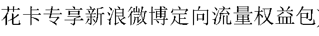 ), flower card voice experience package with 80 minutes for 24 months ( 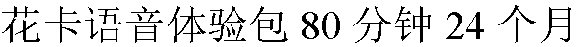 ), M-zone 5G Pass 2020 for 30 yuan ( 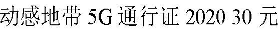 ), Migu Music platinum member life ( 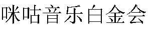 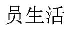 ), recharge 50 yuan to enjoy a monthly gift of 15 yuan for my rights coupon for six months ( 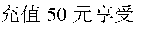 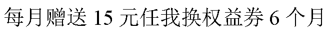 ), Migu Video member sports package for one yuan in the first month ( 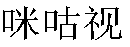 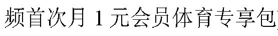 ), and recharge to get a 20-yuan monthly rental fee discount ( 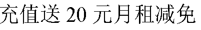 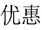 ).

The second standard names may be classified based on the first characters.

The second standard names corresponding to the first character " 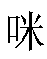 " are: Migu Video SVIP package one yuan in the first two months ( 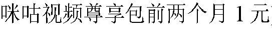 ), Migu Video SVIP package ( 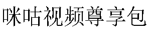 ), Migu Music platinum member life ( 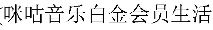 ), and Migu Video member sports package for one yuan in the first month ( 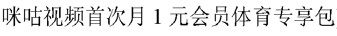 ).

The second standard names corresponding to the first character " 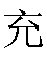 " are: recharge 50 yuan to enjoy a 50-yuan consumption voucher with a six-month contract commitment ( 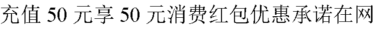 6 ffijj), recharge 100 yuan to enjoy a 100-yuan consumption voucher with a six-month contract commitment ( 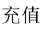 100 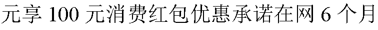 ), recharge 50 yuan to enjoy a monthly gift of 15 yuan for my rights coupon for six months ( 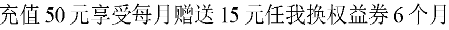 ), and recharge to get a 20-yuan monthly rental fee discount ( 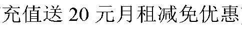 ).

The second standard names corresponding to the first character " 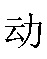 " are: M-zone 5G Pass 2020 for 30 yuan: one yuan in the first month ( 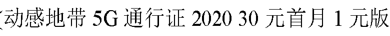 ), M-zone Pass for 30 yuan ( 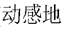 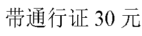 ), and M-zone 5G Pass 2020 for 30 yuan ( 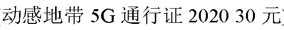 ).

The second standard names corresponding to the first character " It " are: flower card-dedicated sponsored traffic package for NetEase Cloud Music ( 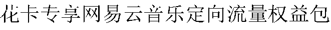 ), flower card-dedicated sponsored traffic package for Sina Weibo ( 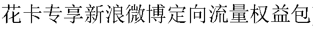 ), and flower card voice experience package with 80 minutes for 24 months ( 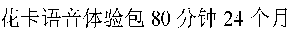 ).

After the second standard name corresponding to each first character is obtained, a maximum length and a minimum length that correspond to each first character may be determined. The maximum length corresponding to the first character is a maximum value of a length of a character string following the first character in the second standard name corresponding to the first character, and the minimum length corresponding to the first character is a minimum value of the length of the character string following the first character in the second standard name corresponding to the first character.

For example, in the second standard names corresponding to the first character " 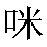 ", lengths of character strings following " 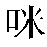 " are respectively 12, 6, 9, and 15, a maximum value is 15, and a minimum value is 6. It may be determined that the first character " 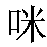 " corresponds to a maximum length of 15 and a minimum length of 6. In a similar manner, it may be determined that the first character " 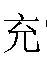 " corresponds to a maximum length of 23 and a minimum length of 11; the first character " 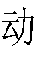 " corresponds to a maximum length of 20 and a minimum length of 9; and the first character " 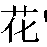 " corresponds to a maximum length of 15 and a minimum length of 14.

When the length is calculated herein, each bit in a value is considered as one character. For example, the value 100 is considered as three characters. During actual application, one value may alternatively be considered as one character. For example, the value 100 is considered as one character. This may be set by a person skilled in the art based on an actual situation. This is not limited in this application.

Then, the statistics dictionary may be established based on each first standard name, each first character, the second standard name corresponding to each first character, and the maximum length and the minimum length that correspond to each first character. Table 1 below shows an example of a representation method of the statistics dictionary.

**Table 1 Example of the statistics dictionary**

| **First character** | **Maximum length** | **Minimum length** | **Second standard name** | **First standard name** |
|---|---|---|---|---|
| 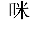 | 15 | 6 | Migu Video SVIP package one yuan in the first two months ( 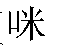 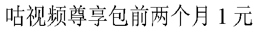 ) | Migu Video SVIP package (one yuan in the first two months) ( 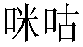 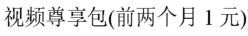 ) |
| | | | Migu Video SVIP package ( 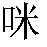 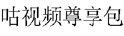 ) | Migu Video SVIP package ( 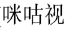 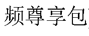 ) |
| | | | Migu Music platinum member life ( 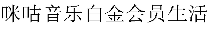 ) | Migu Music platinum member life ( 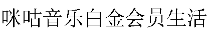 ) |
| | | | Migu Video member sports package for one yuan in the first month ( 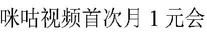 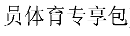 ) | Migu Video (member sports package) for one yuan in the first month ( 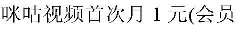 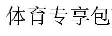 ) |
| | 23 | 11 | Recharge 50 yuan to enjoy a 50-yuan consumption voucher with | Recharge 50 yuan to enjoy a 50-yuan consumption voucher (with a |
| | | | a six-month contract commitment ( 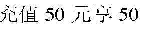 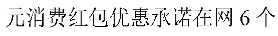 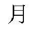 ) | six-month contract commitment) ( 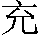 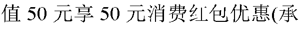 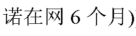 ) |
| | | | Recharge 100 yuan to enjoy a 100-yuan consumption voucher with a six-month contract commitment ( 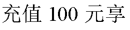 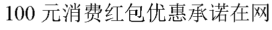 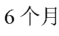 ) | Recharge 100 yuan to enjoy a 100-yuan consumption voucher (with a six-month contract commitment) ( 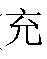 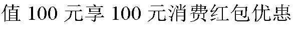 ( 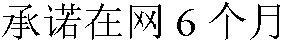 ) |
| | | | Recharge 50 yuan to enjoy a monthly gift of 15 yuan for my rights coupon for six months ( 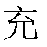 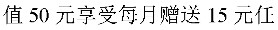 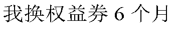 ) | Recharge 50 yuan to enjoy a monthly gift of 15 yuan for my rights coupon (for six months) ( 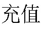 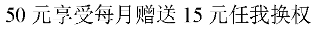 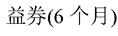 ) |
| | | | Recharge to get a 20-yuan monthly rental fee discount ( 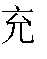 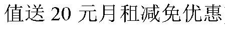 ) | Recharge to get a 20-yuan monthly rental fee discount ( 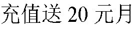 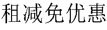 ) |
| 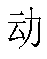 | 20 | 9 | M-zone 5G Pass 2020 for 30 yuan: one yuan in the first month ( 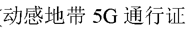 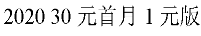 ) | M-zone 5G Pass-2020-30 yuan (one yuan in the first month) ( 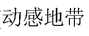 5G 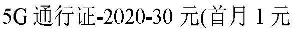 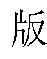 ) |
| | | | M-zone Pass for 30 yuan ( 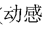 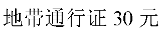 ) | M-zone Pass-30 yuan ( 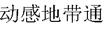 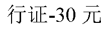 ) |
| | | | M-zone 5G Pass 2020 for 30 yuan ( 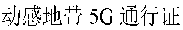 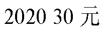 ) | M-zone 5G Pass-2020-30 yuan ( 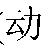 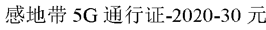 ) |
| | 15 | 14 | Flower card-dedicated sponsored traffic package for NetEase Cloud Music ( 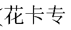 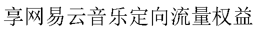 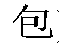 ) ) | Flower card-dedicated sponsored traffic package for NetEase Cloud Music ( 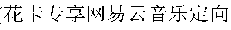 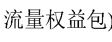 ) |
| | | | Flower card-dedicated sponsored traffic package for Sina Weibo ( 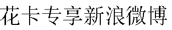 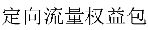 ) | Flower card-dedicated sponsored traffic package for Sina Weibo ( 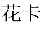 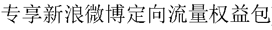 ) |
| | | | Flower card voice experience package with 80 minutes for 24 months ( 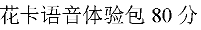 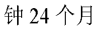 ) | Flower card voice experience package-80 minutes (24 months) ( 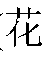 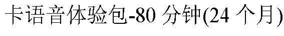 ) |

In this manner, the statistics dictionary including each first standard name, each first character, the second standard name corresponding to each first character, and the maximum length and the minimum length that correspond to each first character can be established, and the work order element is extracted based on the statistics dictionary, so that accuracy of extracting the work order element can be improved.

In a possible implementation, the second standard names may be further classified based on second characters of the second standard names to obtain a second standard name corresponding to each second character. The second character herein is a 2^{nd} character in the second standard name. For example, if the second standard name is: Migu Video SVIP package one yuan in the first two months ( 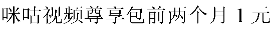 ), the second character of the second standard name is " 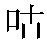 ". For another example, if the second standard name is: M-zone 5G Pass for 30 yuan ( 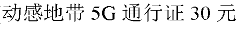 ), the second character of the second standard name is " 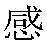 ".

For example, it is assumed that the second standard names are respectively: Migu Video SVIP package one yuan in the first two months ( 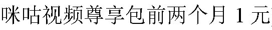 ), Migu Video SVIP package ( 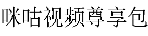 ), recharge 50 yuan to enjoy a 50-yuan consumption voucher with a six-month contract commitment ( 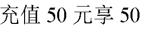 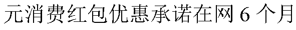 ), M-zone 5G Pass 2020 for 30 yuan: one yuan in the first month ( 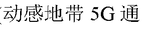 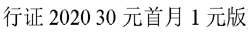 ), M-zone Pass for 30 yuan ( 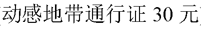 ), recharge 100 yuan to enjoy a 100-yuan consumption voucher with a six-month contract commitment ( 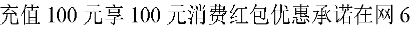 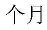 ), flower card-dedicated sponsored traffic package for NetEase Cloud Music ( 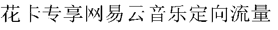 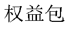 ), flower card-dedicated sponsored traffic package for Sina Weibo ( 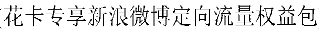 ), flower card voice experience package with 80 minutes for 24 months ( 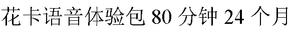 ), M-zone 5G Pass 2020 for 30 yuan ( 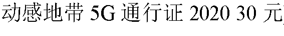 ), Migu Music platinum member life ( 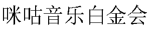 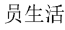 ), recharge 50 yuan to enjoy a monthly gift of 15 yuan for my rights coupon for six months ( 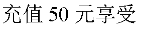 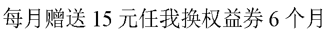 ), Migu Video member sports package for one yuan in the first month ( 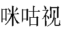 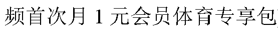 ), and recharge to get a 20-yuan monthly rental fee discount ( 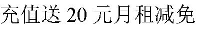 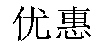 ).

The second standard names may be classified based on the second characters.

The second standard names corresponding to the second character " 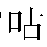 " are: Migu Video SVIP package one yuan in the first two months ( 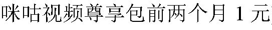 ), Migu Video SVIP package ( 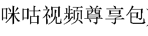 ), Migu Music platinum member life ( 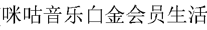 ), and Migu Video member sports package for one yuan in the first month ( 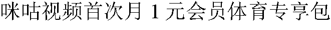 ).

The second standard names corresponding to the second character " 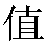 " are: recharge 50 yuan to enjoy a 50-yuan consumption voucher with a six-month contract commitment ( 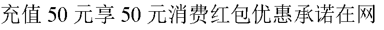 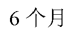 ), recharge 100 yuan to enjoy a 100-yuan consumption voucher with a six-month contract commitment ( 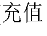 100 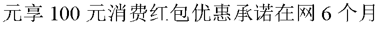 ), recharge 50 yuan to enjoy a monthly gift of 15 yuan for my rights coupon for six months ( 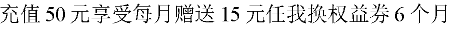 ), and recharge to get a 20-yuan monthly rental fee discount ( 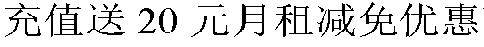 ).

The second standard names corresponding to the second character " 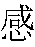 " are: M-zone 5G Pass 2020 for 30 yuan: one yuan in the first month ( 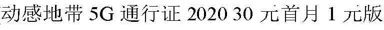 ), M-zone Pass for 30 yuan ( 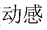 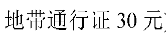 ), and M-zone 5G Pass 2020 for 30 yuan ( 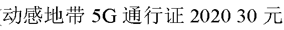 ).

The second standard names corresponding to the second character " 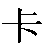 " are: flower card-dedicated sponsored traffic package for NetEase Cloud Music ( 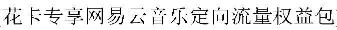 ), flower card-dedicated sponsored traffic package for Sina Weibo ( 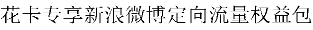 ), and flower card voice experience package with 80 minutes for 24 months ( 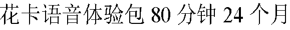 ).

After the second standard names corresponding to the second characters are obtained, a maximum length and a minimum length that correspond to each second character may be determined. The maximum length corresponding to the second character is a maximum value of a length of a character string following the second character in the second standard name corresponding to the second character, and the minimum length corresponding to the second character is a minimum value of the length of the character string following the second character in the second standard name corresponding to the second character.

For example, in the second standard names corresponding to the second character " 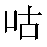 ", lengths of character strings following " 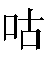 " are respectively 11, 5, 8, and 14, a maximum value is 14, and a minimum value is 5. It may be determined that the second character " 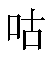 " corresponds to a maximum length of 14 and a minimum length of 4. In a similar manner, it may be determined that the second character " 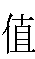 " corresponds to a maximum length of 22 and a minimum length of 10; the second character " 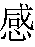 " corresponds to a maximum length of 19 and a minimum length of 8; and the second character " 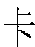 " corresponds to a maximum length of 14 and a minimum length of 15. When the length is calculated herein, each bit in a value is considered as one character. For example, the value 100 is considered as three characters.

Then, each second character, the second standard name corresponding to each second character, and the maximum length and the minimum length that correspond to each second character are added to the statistics dictionary. In this manner, information related to the second character can be added to the statistics dictionary, so that the statistics dictionary includes more information, to improve accuracy of extracting the work order element based on the statistics dictionary.

In a possible implementation, in a manner similar to a manner used for the second character, the second standard names may be further classified based on third characters of the second standard names to obtain a second standard name corresponding to each third character, and a maximum length and a minimum length that correspond to each third character are determined. Then, each third character, the second standard name corresponding to each third character, and the maximum length and the minimum length that correspond to each third character are added to the statistics dictionary. In this manner, information related to the third character can be added to the statistics dictionary, so that the statistics dictionary includes more information, to improve accuracy of extracting the work order element based on the statistics dictionary.

During actual application, a person skilled in the art may determine, based on information such as calculation overheads and delay requirements during work order element extraction, whether the statistics dictionary includes related information of the second character, the third character, or more characters. This is not specifically limited in this application.

In a possible implementation, a second semantic similarity between each second standard name and a corresponding first standard name may be further determined by using a similarity algorithm, for example, by using an unsupervised sentence similarity algorithm, and the second semantic similarity is added to the statistics dictionary, so that the second semantic similarity can be directly used in a work order element extraction process, to improve efficiency of extracting the work order element.

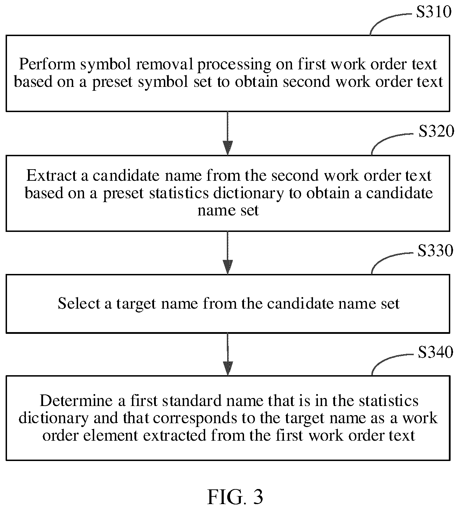

FIG. 3 is a flowchart of a work order element extraction method according to an embodiment of this application. As shown in FIG. 3, the work order element extraction method includes the following steps.

Step S310: Perform symbol removal processing on first work order text based on a preset symbol set to obtain second work order text.

The first work order text is text obtained by converting content of a call between an agent and a user by using a speech recognition ASR technology. The first work order text may include content such as text and a punctuation mark. After the first work order text is obtained, symbol removal processing may be performed on the first work order text based on the preset symbol set to obtain the second work order text.

The preset symbol set may include a plurality of punctuation marks that need to be removed. For example, the preset symbol set may include punctuation marks such as a bracket, a double quotation mark, a single quotation mark, a question mark, a comma, a hyphen, a comma, and a period. During actual application, a person skilled in the art may set, based on an actual situation, a specific punctuation mark included in the symbol set. For example, all punctuation marks that are meaningless to work order element extraction may be added to the symbol set. A specific symbol included in the symbol set is not limited in this application.

Step S320: Extract a candidate name from the second work order text based on a preset statistics dictionary to obtain a candidate name set.

In a possible implementation, the statistics dictionary may include a plurality of first standard names and a second standard name corresponding to each first standard name, where the second standard name is a name obtained by performing symbol removal processing on the first standard name. The second standard name is in one-to-one correspondence with the first standard name. The statistics dictionary may further include a plurality of first characters, and a maximum length and a minimum length that correspond to each first character. In an example, the statistics dictionary may further include a second standard name corresponding to each first character.

In a possible implementation, when the candidate name is extracted from the second work order text based on the preset statistics dictionary, characters in the second work order text may be sequentially matched. An example of a specific process may be as follows.

A 1^{st} character in the second work order text may be first used as a to-be-matched character. Then, it is determined, in a manner such as searching or comparison, whether the to-be-matched character is the first character in the statistics dictionary. When the to-be-matched character is the first character in the statistics dictionary, a first character string is truncated from the second work order text by using the to-be-matched character as a start point and using a maximum length corresponding to the to-be-matched character in the statistics dictionary plus 1 as a truncation length. Then, whether the first character string meets a preset semantic similarity condition is determined.

During determining of whether the first character string meets the preset semantic similarity condition, a first semantic similarity between the first character string and each second standard name may be first determined by using a similarity algorithm, for example, by using an unsupervised sentence similarity algorithm. In an example, when the statistics dictionary further includes the second standard name corresponding to each first character, a second standard name that is in the statistics dictionary and that corresponds to the to-be-matched character may be considered as a fourth standard name, and a first semantic similarity between the first character string and each fourth standard name is calculated, to reduce a calculation amount and improve processing efficiency. Then, a maximum value of the first semantic similarity is selected, and a second standard name corresponding to the maximum value of the first semantic similarity is determined as a third standard name. Then, a difference between the maximum value of the first semantic similarity and a second semantic similarity is calculated. The second semantic similarity herein is a semantic similarity between the third standard name and a corresponding first standard name. The second semantic similarity may be calculated in real time, or may be obtained from the statistics dictionary. When the difference between the maximum value of the first semantic similarity and the second semantic similarity is less than or equal to a preset similarity threshold, it is determined that the first character string meets the preset semantic similarity condition; otherwise, it is determined that the first character string does not meet the preset semantic similarity condition.

In an example, the semantic similarity condition may be represented by using the following formula (1): |*Sim*1 - *Sim*2| ≤ *threshold* (1)

In the formula (1), *Sim*1 represents the maximum value of the first semantic similarity; Sim2 represents the second semantic similarity, to be specific, the semantic similarity between the third standard name and the corresponding first standard name; and *threshold* represents the preset similarity threshold, and a value of the preset similarity threshold is, for example, 0.15. A person skilled in the art may determine a specific value of *threshold* based on an actual situation. This is not limited in this application.

When the first character string meets the preset semantic similarity condition, the first character string may be added to the candidate name set as the candidate name. Then, a 1^{st} character following the first character string in the second work order text is used as a new to-be-matched character, and the step "determining whether the to-be-matched character is the first character in the statistics dictionary" starts to be re-performed.

When the to-be-matched character is not the first character in the statistics dictionary, or when the first character string does not meet the semantic similarity condition, a first location may be determined in the second work order text, where the first location is a location that is after the to-be-matched character and that is a first length away from the to-be-matched character, and the first length herein is a smallest value in minimum lengths corresponding to the first characters in the statistics dictionary. Then, a character at the first location is used as a new to-be-matched character, and the step "determining whether the to-be-matched character is the first character in the statistics dictionary" starts to be re-performed.

The foregoing processing process is repeated until the second work order text ends, to obtain a final candidate name set. In a process of extracting the candidate name from the second work order text, a dynamic step sliding window (dynamic step sliding window) is used. To be specific, a step size of the sliding window is dynamically adjusted based on the to-be-matched character and the statistics dictionary. A specific example is as follows.

When the to-be-matched character is the first character in the statistics dictionary and the truncated first character string meets the semantic similarity condition, a location of the new to-be-matched character is: Startlndex' = Startlndex + MaxLen + 1, where Startlndex represents a location of the to-be-matched character, Startlndex' represents the location of the new to-be-matched character, MaxLen represents the maximum length corresponding to the to-be-matched character in the statistics dictionary, and a step of the sliding window is MaxLen + 1.

When the to-be-matched character is not the first character in the statistics dictionary, or when the first character string does not meet the semantic similarity condition, a location of the new to-be-matched character is: Startlndex' = StartIndex + MinLen + 1, where MinLen represents the smallest value in the minimum lengths corresponding to the first characters in the statistics dictionary, and a step of the sliding window is MinLen + 1.

In this manner, impact of noise interference in the work order text on candidate name extraction can be reduced. For example, impact of a problem such as a semantic matching error brought by a conversion typo, a redundant word, a missing word, or an inconsistent sentence length caused by incorrect punctuation mark insertion in the work order text on candidate name extraction can be reduced, thereby improving accuracy of extracting the work order element.

In a possible implementation, the statistics dictionary may further include a plurality of second characters, and a maximum length and a minimum length that correspond to each second character. When the candidate name is extracted from the second work order text based on the preset statistics dictionary, and when the to-be-matched character is not the first character in the statistics dictionary, or when the first character string does not meet the semantic similarity condition, it may be determined, in a manner such as searching or comparison, whether the to-be-matched character is the second character in the statistics dictionary.

When the to-be-matched character is the second character in the statistics dictionary, a second character string is truncated from the second work order text by using the to-be-matched character as a start point and using a maximum length corresponding to the to-be-matched character (used as the second character) in the statistics dictionary plus 1 as a truncation length. Then, whether the second character string meets the semantic similarity condition is determined. A determining manner is similar to a manner of determining whether the first character string meets the semantic similarity condition, and details are not described herein again.

When the second character string meets the semantic similarity condition, the second character string may be added to the candidate name set as the candidate name. Then, a 1^{st} character following the second character string in the second work order text is used as a new to-be-matched character, and the step "determining whether the to-be-matched character is the first character in the statistics dictionary" starts to be re-performed.

When the to-be-matched character is not the second character in the statistics dictionary, or when the second character string does not meet the semantic similarity condition, a second location may be determined in the second work order text, where the second location is a location that is after the to-be-matched character and that is a second length away from the to-be-matched character, and the second length herein is a smallest value in minimum lengths corresponding to the second characters in the statistics dictionary. Then, a character at the second location is used as a new to-be-matched character, and the step "determining whether the to-be-matched character is the first character in the statistics dictionary" starts to be re-performed. The foregoing processing process is repeated until the second work order text ends, to obtain a final candidate name set.

In this manner, impact of noise interference in the work order text (especially a conversion typo, a redundant word, or a missing word in the work order text) on candidate name extraction can be further reduced, thereby improving accuracy of extracting the work order element.

In a possible implementation, the statistics dictionary may further include a plurality of third characters, and a maximum length and a minimum length that correspond to each third character. When the candidate name is extracted from the second work order text based on the preset statistics dictionary, and when the to-be-matched character is neither the first character nor the second character in the statistics dictionary, or when the second character string does not meet the semantic similarity condition, it may be determined, in a manner such as searching or comparison, whether the to-be-matched character is the third character in the statistics dictionary.

When the to-be-matched character is the third character in the statistics dictionary, a third character string is truncated from the second work order text by using the to-be-matched character as a start point and using a maximum length corresponding to the to-be-matched character (used as the third character) in the statistics dictionary plus 1 as a truncation length. Then, whether the third character string meets the semantic similarity condition is determined. A determining manner is similar to the manner of determining whether the first character string meets the semantic similarity condition, and details are not described herein again.

When the third character string meets the semantic similarity condition, the third character string may be added to the candidate name set as the candidate name. Then, a 1^{st} character following the third character string in the second work order text is used as a new to-be-matched character, and the step "determining whether the to-be-matched character is the first character in the statistics dictionary" starts to be re-performed.

When the to-be-matched character is not the third character in the statistics dictionary, or when the third character string does not meet the semantic similarity condition, a third location may be determined in the second work order text, where the third location is a location that is after the to-be-matched character and that is a third length away from the to-be-matched character, and the third length herein is a smallest value in minimum lengths corresponding to the third characters in the statistics dictionary. Then, a character at the third location is used as a new to-be-matched character, and the step "determining whether the to-be-matched character is the first character in the statistics dictionary" starts to be re-performed. The foregoing processing process is repeated until the second work order text ends, to obtain a final candidate name set.

In this manner, impact of noise interference in the work order text (especially a conversion typo, a redundant word, or a missing word in the work order text) on candidate name extraction can be further reduced, thereby improving accuracy of extracting the work order element.

During actual application, a person skilled in the art may determine, based on information such as calculation overheads and delay requirements during work order element extraction, whether the to-be-matched character is the first character, the second character, the third character, or more characters during candidate name extraction, for example, only determine whether the to-be-matched character is the first character; determine whether the to-be-matched character is the first character and determine whether the to-be-matched character is the second character; or determine whether the to-be-matched character is the first character, determine whether the to-be-matched character is the second character, and determine whether the to-be-matched character is the third character. This is not specifically limited in this application.

Step S330: Select a target name from the candidate name set.

After the candidate name set is obtained, for any candidate name in the candidate name set, a first semantic similarity between the candidate name and each second standard name may be determined, and a maximum value of the first semantic similarity between the candidate name and each second standard name is determined as a third semantic similarity of the candidate name. Then, a maximum value of the third semantic similarity is determined, and a candidate name that is in the candidate name set and that corresponds to the maximum value of the third semantic similarity is determined as the target name. In other words, the target name is a candidate name that is in the candidate name set and that has a highest semantic similarity with the second standard name in the statistics dictionary.

For example, it is assumed that the candidate name set includes three candidate names: a candidate name 1, a candidate name 2, and a candidate name 3. In this case, when the target name is selected, a first semantic similarity between the candidate name 1 and each second standard name may be calculated, and a maximum value of the first semantic similarity between the candidate name 1 and each second standard name is determined as a third semantic similarity (assumed to be 0.98) of the candidate name 1. In addition, in a similar manner, a third semantic similarity (assumed to be 0.92) of the candidate name 2 and a third semantic similarity (assumed to be 0.89) of the candidate name 3 are determined, and a maximum value of the third semantic similarity is determined as 0.98. Then, the candidate name 1 (to be specific, a candidate name corresponding to the maximum value 0.98 of the third semantic similarity) is determined as the target name.

Step S340: Determine a first standard name that is in the statistics dictionary and that corresponds to the target name as a work order element extracted from the first work order text.

After the target name is determined, a second standard name (to be specific, a second standard name corresponding to a maximum value of a first semantic similarity between the target name and the second standard name in the statistics dictionary) corresponding to the target name may be determined from the statistics dictionary, the first standard name that is in the statistics dictionary and that corresponds to the target name is determined based on a one-to-one correspondence between the second standard name and the first standard name in the statistics dictionary, and the first standard name that is in the statistics dictionary and that corresponds to the target name is determined as the work order element extracted from the first work order text. Then, the extracted work order element is filled in a preset location of a work order.

In this manner, the extracted work order element is the first standard name (namely, an original standard name of a service provided by a service provider), so that the target name (which may have a problem such as a typo or an incomplete name) extracted from the work order text cannot be directly used as the work order element, thereby improving normalization and standardization of the work order element.

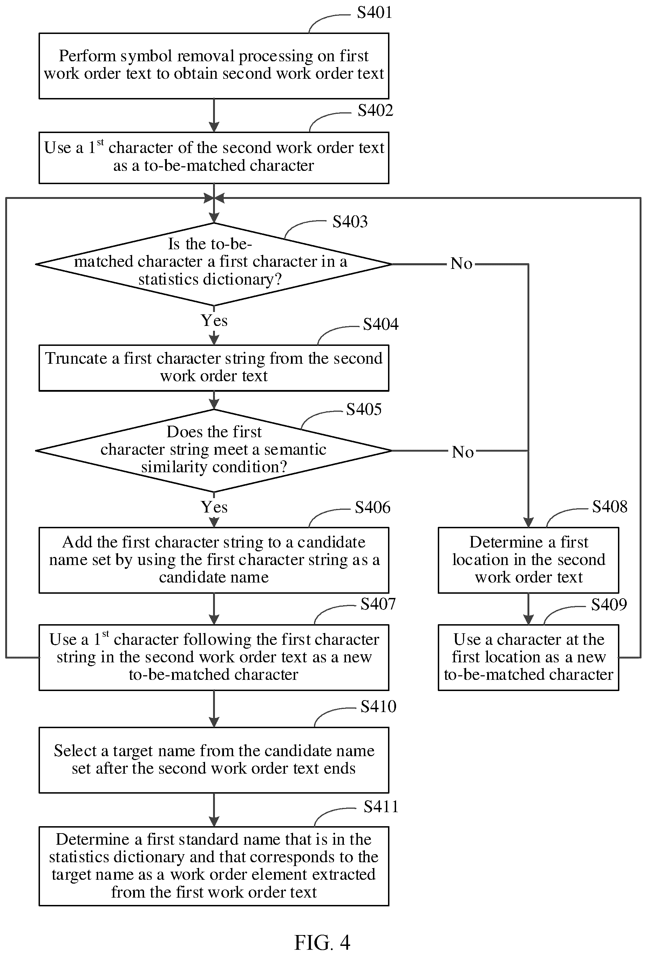

FIG. 4 is a diagram of a processing process of a work order element extraction method according to an embodiment of this application. A statistics dictionary in this embodiment includes a plurality of first standard names, a second standard name corresponding to each first standard name, a plurality of first characters, and a maximum length and a minimum length that correspond to each first character. As shown in FIG. 4, the processing process of the work order element extraction method in this embodiment includes the following steps.

Step S401: Perform symbol removal processing on first work order text based on a preset symbol set to obtain second work order text.

Step S402: Use a 1^{st} character of the second work order text as a to-be-matched character.

Step S403: Determine whether the to-be-matched character is the first character in the statistics dictionary.

When the to-be-matched character is the first character in the statistics dictionary, step S404 is performed to truncate a first character string from the second work order text by using the to-be-matched character as a start point and using a maximum length corresponding to the to-be-matched character (used as the first character) in the statistics dictionary plus 1 as a truncation length. Step S405: Determine whether the first character string meets a preset semantic similarity condition.

When the first character string meets the semantic similarity condition, step S406 is performed to add the first character string to a candidate name set by using the first character string as a candidate name. Step S407: Use a 1^{st} character following the first character string in the second work order text as a new to-be-matched character. Then, step S403 starts to be re-performed.

When the to-be-matched character is not the first character in the statistics dictionary, or when the first character string does not meet the semantic similarity condition, step S408 is performed to determine a first location in the second work order text, where the first location is a location that is after the to-be-matched character and that is a first length away from the to-be-matched character, and the first length is a smallest value in minimum lengths corresponding to the first characters in the statistics dictionary. Step S409: Use a character at the first location as a new to-be-matched character. Step S403 starts to be re-performed.

The foregoing processing process (step S403->step S404->step S405->step S406->step S407->step S403, or step S403->step S408->step S409->step S403) is repeated until the second work order text ends, to obtain a final candidate name set.

Then, step S410 is performed to select a target name from the candidate name set after the second work order text ends, where the target name is a candidate name that is in the candidate name set and that has a highest semantic similarity with the second standard name in the statistics dictionary. Step S411: Determine a first standard name that is in the statistics dictionary and that corresponds to the target name as a work order element extracted from the first work order text, and fill the work order element in a preset location of a work order.

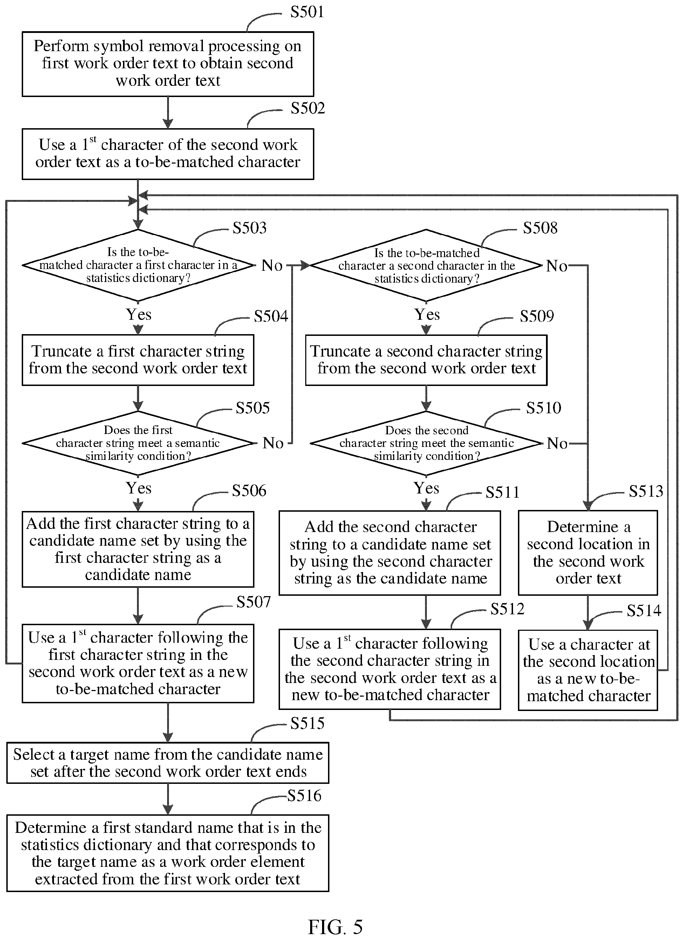

FIG. 5 is a diagram of a processing process of a work order element extraction method according to an embodiment of this application. A statistics dictionary in this embodiment includes a plurality of first standard names, a second standard name corresponding to each first standard name, a plurality of first characters, a maximum length and a minimum length that correspond to each first character, a plurality of second characters, and a maximum length and a minimum length that correspond to each second character. As shown in FIG. 5, the processing process of the work order element extraction method in this embodiment includes the following steps.

Step S501: Perform symbol removal processing on first work order text based on a preset symbol set to obtain second work order text.

Step S502: Use a 1^{st} character of the second work order text as a to-be-matched character.

Step S503: Determine whether the to-be-matched character is the first character in the statistics dictionary.

When the to-be-matched character is the first character in the statistics dictionary, step S504 is performed to truncate a first character string from the second work order text by using the to-be-matched character as a start point and using a maximum length corresponding to the to-be-matched character (used as the first character) in the statistics dictionary plus 1 as a truncation length. Step S505: Determine whether the first character string meets a preset semantic similarity condition.

When the first character string meets the semantic similarity condition, step S506 is performed to add the first character string to a candidate name set by using the first character string as a candidate name. Step S507: Use a 1^{st} character following the first character string in the second work order text as a new to-be-matched character. Then, step S503 starts to be re-performed.

When the to-be-matched character is not the first character in the statistics dictionary, or when the first character string does not meet the semantic similarity condition, step S508 is performed to determine whether the to-be-matched character is the second character in the statistics dictionary. When the to-be-matched character is the second character in the statistics dictionary, step S509 is performed to truncate a second character string from the second work order text by using the to-be-matched character as a start point and using a maximum length corresponding to the to-be-matched character (used as the second character) in the statistics dictionary plus 1 as a truncation length. Step S510: Determine whether the second character string meets the semantic similarity condition.

When the second character string meets the semantic similarity condition, step S511 is performed to add the second character string to a candidate name set by using the second character string as the candidate name. Step S512: Use a 1^{st} character following the second character string in the second work order text as a new to-be-matched character. Then, step S503 starts to be re-performed.

When the to-be-matched character is not the second character in the statistics dictionary, or when the second character string does not meet the semantic similarity condition, step S513 is performed to determine a second location in the second work order text, where the second location is a location that is after the to-be-matched character and that is a second length away from the to-be-matched character, and the second length is a smallest value in minimum lengths corresponding to the second characters in the statistics dictionary. Step S514: Use a character at the second location as a new to-be-matched character. Step S503 starts to be re-performed.

The foregoing processing process (step S503->step S504->step S505->step S506->step S507->step S503, step S503->step S508->step S509->step S510->step S511->step S512->step S503, step S503->step S504->step S505->step S508->step S509->step S510->step S511->step S512->step S503, step S503->step S508->step S513->step S514->step S503, or step S503->step S504->step S505->step S508->step S513->step S514->step S503) is repeated until the second work order text ends, to obtain a final candidate name set.

Then, step S515 is performed to select a target name from the candidate name set after the second work order text ends, where the target name is a candidate name that is in the candidate name set and that has a highest semantic similarity with the second standard name in the statistics dictionary. Step S516: Determine a first standard name that is in the statistics dictionary and that corresponds to the target name as a work order element extracted from the first work order text, and fill the work order element in a preset location of a work order.

In embodiments in FIG. 4 and FIG. 5, examples of determining the first character and determining the first character and the second character are separately used, to describe the work order element extraction method in embodiments of this application. In a work order element extraction process, a processing manner of determining more characters is similar to that in the foregoing embodiments, and details are not described herein again.

According to the work order element extraction method in embodiments of this application, a target name can be extracted, based on a statistics dictionary and a dynamic step sliding window and with reference to an unsupervised sentence similarity matching algorithm, from work order text converted by using ASR, an original standard name corresponding to the target name is used as a work order element, and the work order element is filled in a preset location of a work order. This not only implements work order element pre-filling (that is, intelligent filling), but also can improve normalization and standardization of work order filling, to effectively reduce a workload of an agent, improve efficiency and standardization of handling the work order by the agent.

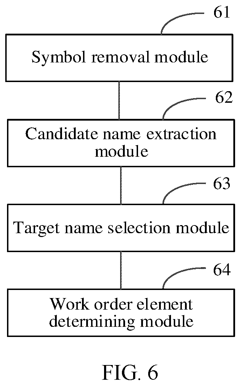

FIG. 6 is a block diagram of a work order element extraction apparatus according to an embodiment of this application. As shown in FIG. 6, the work order element extraction apparatus includes:
a symbol removal module 61, configured to perform symbol removal processing on first work order text based on a preset symbol set to obtain second work order text;
a candidate name extraction module 62, configured to extract a candidate name from the second work order text based on a preset statistics dictionary to obtain a candidate name set, where the statistics dictionary includes a plurality of first standard names and a second standard name corresponding to each first standard name, and the second standard name is a name obtained by performing symbol removal processing on the first standard name;
a target name selection module 63, configured to select a target name from the candidate name set, where the target name is a candidate name that is in the candidate name set and that has a highest semantic similarity with the second standard name in the statistics dictionary; and
a work order element determining module 64, configured to determine a first standard name that is in the statistics dictionary and that corresponds to the target name as a work order element extracted from the first work order text.

In a possible implementation, the statistics dictionary further includes a plurality of first characters and a maximum length corresponding to each first character; and the candidate name extraction module 62 includes: a first to-be-matched character determining submodule, configured to use a 1^{st} character of the second work order text as a to-be-matched character; a first judging submodule, configured to determine whether the to-be-matched character is the first character in the statistics dictionary; a first character string truncating submodule, configured to: when the to-be-matched character is the first character in the statistics dictionary, truncate a first character string from the second work order text by using the to-be-matched character as a start point and using a maximum length corresponding to the to-be-matched character in the statistics dictionary plus 1 as a truncation length; a second judging submodule, configured to determine whether the first character string meets a preset semantic similarity condition; a first set adding submodule, configured to: when the first character string meets the semantic similarity condition, add the first character string to the candidate name set by using the first character string as the candidate name; and a second to-be-matched character determining submodule, configured to: use a 1^{st} character following the first character string in the second work order text as a new to-be-matched character, and start to re-perform the following step: determining whether the to-be-matched character is the first character in the statistics dictionary.

In a possible implementation, the second judging submodule is configured to: determine a first semantic similarity between the first character string and each second standard name; determine a second standard name corresponding to a maximum value of the first semantic similarity as a third standard name; and when a difference between the maximum value of the first semantic similarity and a second semantic similarity is less than or equal to a preset similarity threshold, determine that the first character string meets the preset semantic similarity condition, where the second semantic similarity is a semantic similarity between the third standard name and a corresponding first standard name.

In a possible implementation, the statistics dictionary further includes a minimum length corresponding to each first character, and the candidate name extraction module 62 further includes: a location determining submodule, configured to: when the to-be-matched character is not the first character in the statistics dictionary, or when the first character string does not meet the semantic similarity condition, determine a first location in the second work order text, where the first location is a location that is after the to-be-matched character and that is a first length away from the to-be-matched character, and the first length is a smallest value in minimum lengths corresponding to the first characters in the statistics dictionary; and a third to-be-matched character determining submodule, configured to: use a character at the first location as a new to-be-matched character, and start to re-perform the following step: determining whether the to-be-matched character is the first character in the statistics dictionary.

In a possible implementation, the statistics dictionary further includes a plurality of second characters and a maximum length corresponding to each second character; and the candidate name extraction module 62 further includes: a third judging submodule, configured to: when the to-be-matched character is not the first character in the statistics dictionary, or when the first character string does not meet the semantic similarity condition, determine whether the to-be-matched character is the second character in the statistics dictionary; a second character string truncating submodule, configured to: when the to-be-matched character is the second character in the statistics dictionary, truncate a second character string from the second work order text by using the to-be-matched character as a start point and using a maximum length corresponding to the to-be-matched character in the statistics dictionary plus 1 as a truncation length; a fourth judging submodule, configured to determine whether the second character string meets the semantic similarity condition; a second set adding submodule, configured to: when the second character string meets the semantic similarity condition, add the second character string to the candidate name set by using the second character string as the candidate name; and a fourth to-be-matched character determining submodule, configured to: use a 1^{st} character following the second character string in the second work order text as a new to-be-matched character, and start to re-perform the following step: determining whether the to-be-matched character is the first character in the statistics dictionary.

In a possible implementation, the apparatus further includes: a statistics dictionary establishment module, configured to establish the statistics dictionary based on the plurality of first standard names.

In a possible implementation, the statistics dictionary establishment module includes: a symbol removal submodule, configured to perform symbol removal processing on each first standard name based on the preset symbol set to obtain the corresponding second standard name; a first classification submodule, configured to classify second standard names based on first characters of the second standard names to obtain a second standard name corresponding to each first character; a first corresponding length determining submodule, configured to determine a maximum length and a minimum length that correspond to each first character; and an establishment submodule, configured to establish the statistics dictionary based on each first standard name, each first character, the second standard name corresponding to each first character, and the maximum length and the minimum length that correspond to each first character.

In a possible implementation, the statistics dictionary establishment module further includes: a second classification submodule, configured to classify the second standard names based on second characters of the second standard names to obtain a second standard name corresponding to each second character; a second corresponding length determining submodule, configured to determine a maximum length and a minimum length that correspond to each second character; and an adding submodule, configured to add each second character, the second standard name corresponding to each second character, and the maximum length and the minimum length that correspond to each second character to the statistics dictionary.

An embodiment of this application provides a work order element extraction apparatus, including a processor and a memory configured to store instructions that can be executed by the processor, where the processor is configured to implement the foregoing method when executing the instructions.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product, including computer-readable code or a non-volatile computer-readable storage medium carrying the computer-readable code. When the computer-readable code is run in a processor of an electronic device, the processor in the electronic device performs the foregoing method.

The computer-readable storage medium may be a tangible device that can retain and store instructions for use by an instruction execution device. The computer-readable storage medium may be, for example, but is not limited to an electrical storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (Random Access Memory, RAM), a read-only memory (Read-Only Memory, ROM), an erasable programmable read-only memory (Erasable Programmable Read-Only Memory, EPROM, or flash memory), a static random access memory (Static Random Access Memory, SRAM), a portable compact disk read-only memory (Compact Disc Read-Only Memory, CD-ROM), a digital video disc (Digital Video Disc, DVD), a memory stick, a floppy disk, a mechanical coding device, for example, a punching card or a groove protrusion structure that stores instructions, and any suitable combination thereof.

The computer-readable program instructions or code described herein may be downloaded from the computer-readable storage medium to each computing/processing device or downloaded to an external computer or external storage device via a network such as the internet, a local area network, a wide area network, and/or a wireless network. The network may include a copper transmission cable, optical fiber transmission, wireless transmission, a router, a firewall, a switch, a gateway computer, and/or an edge server. A network adapter card or a network interface in each computing/processing device receives the computer-readable program instructions from the network, and forwards the computer-readable program instructions for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in one or any combination of a plurality of programming languages. The programming languages include an object-oriented programming language such as Smalltalk and C++, and a conventional procedural programming language such as a "C" language or a similar programming language. The computer-readable program instructions may be executed completely on a user computer, executed partially on the user computer, executed as a tandalone software package, executed partially on the user computer and partially on a remote computer, or executed completely on the remote computer or a server. When the remote computer is involved, the remote computer may be connected to the user computer via any type of network, including a local area network (Local Area Network, LAN) or a wide area network (Wide Area Network, WAN), or may be connected to an external computer (for example, connected by using an internet service provider via the internet). In some embodiments, an electronic circuit, for example, a programmable logic circuit, a field programmable gate array (Field Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a dedicated computer, or another programmable data processing apparatus to produce a machine, so that the instructions, when executed by the processor of the computer or the another programmable data processing apparatus, create an apparatus for implementing functions/actions specified in one or more blocks in the flowcharts and/or block diagrams. These computer-readable program instructions may alternatively be stored in the computer-readable storage medium. These instructions enable the computer, the programmable data processing apparatus, and/or another device to work in a specific manner. Therefore, the computer-readable medium storing the instructions includes an artifact that includes instructions for implementing various aspects of the functions/actions specified in the one or more blocks in the flowcharts and/or block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement the functions/actions specified in the one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order. This depends on a function involved.

It should also be noted that each block in the block diagrams and/or flowcharts, and a combination of blocks in the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, the word "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Embodiments of this application are described above. The foregoing descriptions are examples, are not exhaustive, and are not limited to the disclosed embodiments. Without departing from the scope of the described embodiments, many modifications and variations are apparent to a person of ordinary skill in the technical field. Selection of terms used in this specification is intended to best explain the principles of embodiments, actual application, or improvements to technologies in the market, or to enable another person of ordinary skill in the art to understand embodiments disclosed in this specification.

## Claims

1. A work order element extraction method, wherein the method comprises:
performing symbol removal processing on first work order text based on a preset symbol set to obtain second work order text;
extracting a candidate name from the second work order text based on a preset statistics dictionary to obtain a candidate name set, wherein the statistics dictionary comprises a plurality of first standard names and a second standard name corresponding to each first standard name, and the second standard name is a name obtained by performing symbol removal processing on the first standard name;
selecting a target name from the candidate name set, wherein the target name is a candidate name that is in the candidate name set and that has a highest semantic similarity with the second standard name in the statistics dictionary; and
determining a first standard name that is in the statistics dictionary and that corresponds to the target name as a work order element extracted from the first work order text.

2. The method according to claim 1, wherein the statistics dictionary further comprises a plurality of first characters and a maximum length corresponding to each first character; and
the extracting a candidate name from the second work order text based on a preset statistics dictionary to obtain a candidate name set comprises:
using a 1^{st} character of the second work order text as a to-be-matched character;
determining whether the to-be-matched character is the first character in the statistics dictionary;
when the to-be-matched character is the first character in the statistics dictionary, truncating a first character string from the second work order text by using the to-be-matched character as a start point and using a maximum length corresponding to the to-be-matched character in the statistics dictionary plus 1 as a truncation length;
determining whether the first character string meets a preset semantic similarity condition;
when the first character string meets the semantic similarity condition, adding the first character string to the candidate name set by using the first character string as the candidate name; and
using a 1^{st} character following the first character string in the second work order text as a new to-be-matched character, and starting to re-perform the following step: determining whether the to-be-matched character is the first character in the statistics dictionary.

3. The method according to claim 2, wherein the determining whether the first character string meets a preset semantic similarity condition comprises:
determining a first semantic similarity between the first character string and each second standard name;
determining a second standard name corresponding to a maximum value of the first semantic similarity as a third standard name; and
when a difference between the maximum value of the first semantic similarity and a second semantic similarity is less than or equal to a preset similarity threshold, determining that the first character string meets the preset semantic similarity condition, wherein the second semantic similarity is a semantic similarity between the third standard name and a corresponding first standard name.

4. The method according to claim 2, wherein the statistics dictionary further comprises a minimum length corresponding to each first character; and
the extracting a candidate name from the second work order text based on a preset statistics dictionary to obtain a candidate name set further comprises:
when the to-be-matched character is not the first character in the statistics dictionary, or when the first character string does not meet the semantic similarity condition, determining a first location in the second work order text, wherein the first location is a location that is after the to-be-matched character and that is a first length away from the to-be-matched character, and the first length is a smallest value in minimum lengths corresponding to the first characters in the statistics dictionary; and
using a character at the first location as a new to-be-matched character, and starting to re-perform the following step: determining whether the to-be-matched character is the first character in the statistics dictionary.

5. The method according to claim 2, wherein the statistics dictionary further comprises a plurality of second characters and a maximum length corresponding to each second character; and
the extracting a candidate name from the second work order text based on a preset statistics dictionary to obtain a candidate name set further comprises:
when the to-be-matched character is not the first character in the statistics dictionary, or when the first character string does not meet the semantic similarity condition, determining whether the to-be-matched character is the second character in the statistics dictionary;
when the to-be-matched character is the second character in the statistics dictionary, truncating a second character string from the second work order text by using the to-be-matched character as a start point and using a maximum length corresponding to the to-be-matched character in the statistics dictionary plus 1 as a truncation length;
determining whether the second character string meets the semantic similarity condition;
when the second character string meets the semantic similarity condition, adding the second character string to the candidate name set by using the second character string as the candidate name; and
using a 1^{st} character following the second character string in the second work order text as a new to-be-matched character, and starting to re-perform the following step: determining whether the to-be-matched character is the first character in the statistics dictionary.

6. The method according to any one of claims 1 to 5, wherein the method further comprises:
establishing the statistics dictionary based on the plurality of first standard names.

7. The method according to claim 6, wherein the establishing the statistics dictionary based on the plurality of first standard names comprises:
performing symbol removal processing on each first standard name based on the preset symbol set to obtain the corresponding second standard name;
classifying second standard names based on first characters of the second standard names to obtain a second standard name corresponding to each first character;
determining a maximum length and a minimum length that correspond to each first character; and
establishing the statistics dictionary based on each first standard name, each first character, the second standard name corresponding to each first character, and the maximum length and the minimum length that correspond to each first character.

8. The method according to claim 6 or 7, wherein the establishing the statistics dictionary based on the plurality of first standard names further comprises:
classifying the second standard names based on second characters of the second standard names to obtain a second standard name corresponding to each second character;
determining a maximum length and a minimum length that correspond to each second character; and
adding each second character, the second standard name corresponding to each second character, and the maximum length and the minimum length that correspond to each second character to the statistics dictionary.

9. A work order element extraction apparatus, wherein the apparatus comprises:
a symbol removal module, configured to perform symbol removal processing on first work order text based on a preset symbol set to obtain second work order text;
a candidate name extraction module, configured to extract a candidate name from the second work order text based on a preset statistics dictionary to obtain a candidate name set, wherein the statistics dictionary comprises a plurality of first standard names and a second standard name corresponding to each first standard name, and the second standard name is a name obtained by performing symbol removal processing on the first standard name;
a target name selection module, configured to select a target name from the candidate name set, wherein the target name is a candidate name that is in the candidate name set and that has a highest semantic similarity with the second standard name in the statistics dictionary; and
a work order element determining module, configured to determine a first standard name that is in the statistics dictionary and that corresponds to the target name as a work order element extracted from the first work order text.

10. The apparatus according to claim 9, wherein the statistics dictionary further comprises a plurality of first characters and a maximum length corresponding to each first character; and
the candidate name extraction module comprises:
a first to-be-matched character determining submodule, configured to use a 1^{st} character of the second work order text as a to-be-matched character;
a first judging submodule, configured to determine whether the to-be-matched character is the first character in the statistics dictionary;
a first character string truncating submodule, configured to: when the to-be-matched character is the first character in the statistics dictionary, truncate a first character string from the second work order text by using the to-be-matched character as a start point and using a maximum length corresponding to the to-be-matched character in the statistics dictionary plus 1 as a truncation length;
a second judging submodule, configured to determine whether the first character string meets a preset semantic similarity condition;
a first set adding submodule, configured to: when the first character string meets the semantic similarity condition, add the first character string to the candidate name set by using the first character string as the candidate name; and
a second to-be-matched character determining submodule, configured to: use a 1^{st} character following the first character string in the second work order text as a new to-be-matched character, and start to re-perform the following step: determining whether the to-be-matched character is the first character in the statistics dictionary.

11. The apparatus according to claim 10, wherein the second judging submodule is configured to:
determine a first semantic similarity between the first character string and each second standard name;
determine a second standard name corresponding to a maximum value of the first semantic similarity as a third standard name; and
when a difference between the maximum value of the first semantic similarity and a second semantic similarity is less than or equal to a preset similarity threshold, determine that the first character string meets the preset semantic similarity condition, wherein the second semantic similarity is a semantic similarity between the third standard name and a corresponding first standard name.

12. The apparatus according to claim 10, wherein the statistics dictionary further comprises a minimum length corresponding to each first character, and the candidate name extraction module further comprises:
a location determining submodule, configured to: when the to-be-matched character is not the first character in the statistics dictionary, or when the first character string does not meet the semantic similarity condition, determine a first location in the second work order text, wherein the first location is a location that is after the to-be-matched character and that is a first length away from the to-be-matched character, and the first length is a smallest value in minimum lengths corresponding to the first characters in the statistics dictionary; and
a third to-be-matched character determining submodule, configured to: use a character at the first location as a new to-be-matched character, and start to re-perform the following step: determining whether the to-be-matched character is the first character in the statistics dictionary.

13. The apparatus according to claim 10, wherein the statistics dictionary further comprises a plurality of second characters and a maximum length corresponding to each second character; and
the candidate name extraction module further comprises:
a third judging submodule, configured to: when the to-be-matched character is not the first character in the statistics dictionary, or when the first character string does not meet the semantic similarity condition, determine whether the to-be-matched character is the second character in the statistics dictionary;
a second character string truncating submodule, configured to: when the to-be-matched character is the second character in the statistics dictionary, truncate a second character string from the second work order text by using the to-be-matched character as a start point and using a maximum length corresponding to the to-be-matched character in the statistics dictionary plus 1 as a truncation length;
a fourth judging submodule, configured to determine whether the second character string meets the semantic similarity condition;
a second set adding submodule, configured to: when the second character string meets the semantic similarity condition, add the second character string to the candidate name set by using the second character string as the candidate name; and
a fourth to-be-matched character determining submodule, configured to: use a 1^{st} character following the second character string in the second work order text as a new to-be-matched character, and start to re-perform the following step: determining whether the to-be-matched character is the first character in the statistics dictionary.

14. The apparatus according to any one of claims 9 to 13, wherein the apparatus further comprises:
a statistics dictionary establishment module, configured to establish the statistics dictionary based on the plurality of first standard names.

15. The apparatus according to claim 14, wherein the statistics dictionary establishment module comprises:
a symbol removal submodule, configured to perform symbol removal processing on each first standard name based on the preset symbol set to obtain the corresponding second standard name;
a first classification submodule, configured to classify second standard names based on first characters of the second standard names to obtain a second standard name corresponding to each first character;
a first corresponding length determining submodule, configured to determine a maximum length and a minimum length that correspond to each first character; and
an establishment submodule, configured to establish the statistics dictionary based on each first standard name, each first character, the second standard name corresponding to each first character, and the maximum length and the minimum length that correspond to each first character.

16. The apparatus according to claim 14 or 15, wherein the statistics dictionary establishment module further comprises:
a second classification submodule, configured to classify the second standard names based on second characters of the second standard names to obtain a second standard name corresponding to each second character;
a second corresponding length determining submodule, configured to determine a maximum length and a minimum length that correspond to each second character; and
an adding submodule, configured to add each second character, the second standard name corresponding to each second character, and the maximum length and the minimum length that correspond to each second character to the statistics dictionary.

17. A work order element extraction apparatus, comprising:
a processor; and
a memory, configured to store instructions that can be executed by the processor, wherein
the processor is configured to implement the method according to any one of claims 1 to 8 when executing the instructions.

18. A non-volatile computer-readable storage medium, wherein the non-volatile computer-readable storage medium stores computer program instructions, and when the computer program instructions are executed by a processor, the method according to any one of claims 1 to 8 is implemented.

19. A computer program product, comprising computer-readable code or a non-volatile computer-readable storage medium carrying the computer-readable code, wherein when the computer-readable code is run in an electronic device, a processor in the electronic device performs the method according to any one of claims 1 to 8.
